# EUROPÄISCHE PATENTSCHRIFT

(11) **EP 3 319 866 B1**
(45) Veröffentlichungstag und Bekanntmachung des Hinweises auf die Patenterteilung: **03.04.2019**
(21) Anmeldenummer: 16736795.2
(22) Anmeldetag: 01.07.2016
(51) Int. Cl.: B62D 35/02

(54) **UNTERBODENVERKLEIDUNG FÜR EINEN KRAFTWAGEN, INSBESONDERE PERSONENKRAFTWAGEN**
UNDERBODY CLADDING FOR A MOTOR VEHICLE, IN PARTICULAR A PASSENGER CAR
HABILLAGE DE DESSOUS DE CAISSE D'UN VÉHICULE AUTOMOBILE, NOTAMMENT D'UN VÉHICULE DE TOURISME

(30) Priorität: 09.07.2015 DE 102015008892
(43) Veröffentlichungstag der Anmeldung: 16.05.2018
(73) Patentinhaber: Daimler AG, 70327 Stuttgart (DE)
(72) Erfinder: SEIDLER, Uwe, 71034 Böblingen (DE); FEI, Xiao, 70180 Stuttgart (DE)
(74) Vertreter: JENSEN & SON
(86) Internationale Anmeldenummer: PCT/EP2016/001123
(87) Internationale Veröffentlichungsnummer: WO 2017/005351

(56) Entgegenhaltungen:
- DE-A1-102010 004 532
- DE-A1-102013 219 212
- US-A1- 2015 048 648

## Beschreibung

Die Erfindung betrifft eine Unterbodenverkleidung für einen Kraftwagen, insbesondere einen Personenkraftwagen, gemäß Oberbegriff des Anspruchs 1 und einen Kraftwagen gemäß Oberbegriff des Anspruchs 7.

Eine derartige Unterbodenverkleidung für einen Kraftwagen ist beispielsweise bereits aus der DE 10 201 004 532 A1 als bekannt zu entnehmen. Die Unterbodenverkleidung weist wenigstens ein im Bereich eines schwenkbaren Fahrzeugrades des Kraftwagens angeordnetes und bei einer Schwenkbewegung des Fahrzeugrades mit diesem mit schwenkbares Unterbodenverkleidungselement auf. Dabei wird das Unterbodenverkleidungselement mit dem Fahrzeugrad sowohl dann verschwenkt, wenn das Fahrzeugrad um seine Lenkachse in eine erste Schwenkrichtung geschwenkt wird, als auch dann, wenn das Fahrzeugrad um seine Schwenkachse in eine der ersten Schwenkrichtung entgegengesetzte, zweite Schwenkrichtung geschwenkt, das heißt gelenkt wird.

Darüber hinaus offenbart die DE 10 2013 219 212 A1 ein Unterboden-Verkleidungsteil einer Radachse im Bereich des Radkastens eines Kraftfahrzeugs, mit einem Grundkörper, dessen abdeckende Fläche veränderbar ist und der eine Befestigungsstruktur zur festen Verbindung mit der Karosserie und/oder eine Befestigungsstruktur zur festen Verbindung mit einem Querlenker des Fahrzeugs aufweist.

Aufgabe der vorliegenden Erfindung ist es, eine Unterbodenverkleidung der eingangs genannten Art zu schaffen, mittels welcher eine besonders vorteilhafte Aerodynamik des Kraftwagens realisierbar ist.

Diese Aufgabe wird erfindungsgemäß durch eine Unterbodenverkleidung mit den Merkmalen des Anspruchs 1 gelöst. Vorteilhafte Ausgestaltungen mit zweckmäßigen Weiterbildungen der Erfindung sind in den übrigen Ansprüchen angegeben.

Um eine Unterbodenverkleidung der eingangs genannten Art zu schaffen, mittels welcher sich eine besonders vorteilhafte Aerodynamik des Kraftwagens realisieren lässt, ist erfindungsgemäß wenigstens ein im Bereich des Fahrzeugrades angeordnetes, zweites Unterbodenverkleidungselement vorgesehen, welches bei einer Schwenkbewegung des Fahrzeugrades mit diesem gegenläufig zu dem ersten Unterbodenverkleidungselement mit schwenkbar ist. Dabei sind die Unterbodenverkleidungselemente relativ zueinander verschwenkbar. Dadurch kann vermieden werden, dass bei Schwenk- beziehungsweise Lenkbewegungen des Fahrzeugrades immer beide Unterbodenverkleidungselemente mit bewegt werden, sondern es wird immer nur eines der Unterbodenverkleidungselemente bewegt. Wird beispielsweise das Fahrzeugrad um seine Lenkachse in eine erste Schwenkrichtung geschwenkt, so wird dabei beispielsweise das erste Unterbodenverkleidungselement mit dem Fahrzeugrad mitbewegt, beispielsweise geschwenkt, während das zweite Unterbodenverkleidungselement nicht bewegt wird und vorzugsweise in seiner Stellung verbleibt, welches es bei einer Stellung des Fahrzeugrades für eine Geradeausfahrt einnimmt. Somit werden sowohl das Fahrzeugrad als auch das erste Unterbodenverkleidungselement relativ zum zweiten Unterbodenverkleidungselement bewegt.

Wird das Fahrzeugrad beispielsweise um seine Lenkachse in eine der ersten Schwenkrichtung entgegengesetzte, zweite Schwenkrichtung geschwenkt, so wird dabei beispielsweise nicht das erste Unterbodenverkleidungselement, sondern das zweite Unterbodenverkleidungselement mit dem Fahrzeugrad mitbewegt, vorzugsweise geschwenkt, sodass dann sowohl das Fahrzeugrad als auch das zweite Unterbodenverkleidungselement relativ zum ersten Unterbodenverkleidungselement bewegt, vorzugsweise verschwenkt werden. Im Vergleich zu einem einstückigen Unterbodenverkleidungselement, welches bei jeder Schwenkbewegung des Fahrzeugrades mitbewegt wird, kann die Anzahl an Lastwechseln halbiert werden, da bei einer Schwenkbewegung beziehungsweise einem Lenkeinschlag des Fahrzeugrads stets nur eines der Unterbodenverkleidungselemente bewegt wird beziehungsweise in Bewegung ist. Hierdurch können jeweilige Längen von Dichtflächen, über welche die Unterbodenverkleidungselemente beispielsweise gegen sich an die Unterbodenverkleidungselemente anschließende Bauelemente des Kraftwagens abgedichtet sind, reduziert werden, sodass eine besonders vorteilhafte und effektive Abdichtung der Unterbodenverkleidungselemente gegen die Bauelemente realisiert werden kann. Dadurch können ungünstige Luftverwirbelungen vermieden werden, sodass der Luftwiderstand und somit die Aerodynamik des Kraftwagens gegenüber einem einstückigen, bei jeder Schwenkbewegung des Fahrzeugrades mit diesem mitschwenkenden Unterbodenverkleidungselement verbessert werden können. In der Folge können der Energie- und somit beispielsweise der Kraftstoffverbrauch des Kraftwagens gering gehalten werden. Bei den zuvor genannten Bauelementen handelt es sich beispielsweise um Teile oder Bereiche einer auch als Radlaufverkleidung bezeichneten Radlaufschale, gegen welche die Unterbodenverkleidungselemente besonders effektiv abgedichtet werden können. Dadurch kann eine aerodynamische Optimierung des Kraftwagens realisiert werden.

Aufgabe der vorliegenden Erfindung ist es auch, einen Kraftwagen der eingangs genannten Art zu schaffen, welcher eine besonders vorteilhafte Aerodynamik aufweist.

Zur Lösung dieser Aufgabe wird ein Kraftwagen mit den Merkmalen des Anspruchs 7 vorgeschlagen. Dieser weist wenigstens eine Unterbodenverkleidung auf, welche wenigstens ein im Bereich eines schwenkbaren Fahrzeugrades angeordnetes und bei einer Schwenkbewegung des Fahrzeugrades mit diesem mitbewegbares Unterbodenverkleidungselement umfasst. Ferner ist wenigstens ein im Bereich des Fahrzeugrades angeordnetes, zweites Unterbodenverkleidungselement vorgesehen. Erfindungsgemäß ist mittels Lenkens des Fahrzeugrades in eine erste Richtung das erste Unterbodenverkleidungselement relativ gegenüber dem zweiten Unterbodenverkleidungselement bewegbar, während mittels des Lenkens des Fahrzeugrades in eine zur ersten Richtung entgegengesetzte, zweite Richtung das zweite Unterbodenverkleidungselement relativ gegenüber dem ersten Unterbodenverkleidungselement bewegbar ist.

Vorteilhafte Ausgestaltungen des Kraftwagens mit zweckmäßigen Weiterbildungen der Erfindung sind in den übrigen Ansprüchen angegeben.

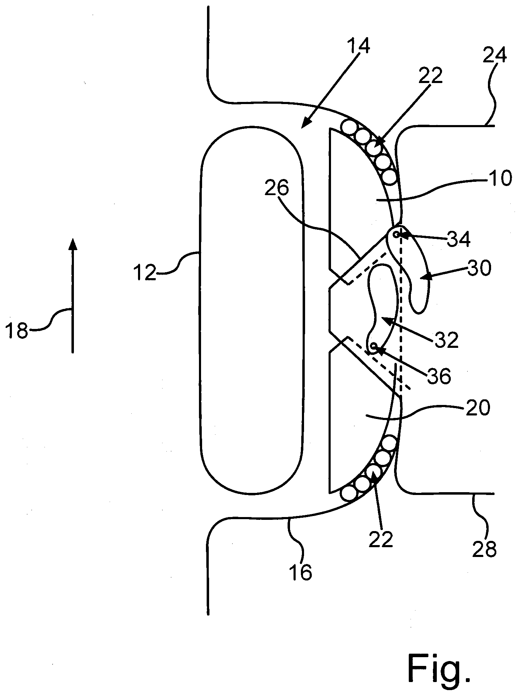

Weitere Vorteile, Merkmale und Einzelheiten der Erfindung ergeben sich aus der nachfolgenden Beschreibung eines bevorzugten Ausführungsbeispiels sowie anhand der Zeichnung.

Die einzige Figur zeigt eine schematische Unteransicht auf eine Unterbodenverkleidung für einen Kraftwagen in Form eines Personenkraftwagens. Die Unterbodenverkleidung weist ein erstes Unterbodenverkleidungselement 10 auf, welches im Bereich eines schwenkbaren Fahrzeugrades 12 des Personenkraftwagens angeordnet ist. Das Fahrzeugrad 12 ist ein Rad, insbesondere ein Vorderrad, einer Achse, insbesondere einer Vorderachse, des Personenkraftwagens. Aus der Fig. ist erkennbar, dass das Fahrzeugrad 12 in einem Radhaus 14 zumindest teilweise angeordnet ist, wobei das Radhaus 14 zumindest teilweise durch eine Radlaufschale 16 begrenzt ist. In der Fig. ist durch einen Richtungspfeil 18 die Vorwärtsfahrtrichtung des Personenkraftwagens veranschaulicht. Mittels des ersten Unterbodenverkleidungselements 10 ist ein erster Teilbereich des Radhauses 14, in welchem das Fahrzeugrad 12 zumindest teilweise aufgenommen ist, in Fahrzeugrichtung nach unten hin abdeckbar.

Um Richtungswechsel und Kurvenfahrten des Personenkraftwagens zu ermöglichen, ist das Fahrzeugrad 12 lenkbar und dabei um eine in der Fig. nicht dargestellte Lenkachse verschwenkbar. Schwenkbewegungen des Fahrzeugrades 12 um seine Lenkachse sind beispielsweise dadurch bewirkbar, dass der Fahrer des Personenkraftwagens eine Lenkhandhabe insbesondere in Form eines Lenkrads betätigt.

Das erste Unterbodenverkleidungselement 10 ist bei einer Schwenkbewegung des Fahrzeugrades 12 mit diesem mitbewegbar, vorzugsweise mitschwenkbar. Wird vorliegend das Fahrzeugrad 12 um seine Lenkachse bezogen auf die Bildebene der Fig. im Uhrzeigersinn geschwenkt, so wird auch das erste Unterbodenverkleidungselement 10 im Uhrzeigersinn mit dem Fahrzeugrad 12 mitgeschwenkt. Hierdurch kann das Unterbodenverkleidungselement 10 einen besonders großen Teilbereich des Radhauses 14, insbesondere bei einer Geradeausfahrt des Personenkraftwagens, abdecken, wobei gleichzeitig Kollisionen zwischen dem Fahrzeugrad 12 und dem ersten Unterbodenverkleidungselement 10 vermieden werden können, wenn das Fahrzeugrad 12 im Uhrzeigersinn und somit in eine erste Schwenkrichtung um die Lenkachse geschwenkt wird.

Um nun eine besonders vorteilhafte Aerodynamik des Personenkraftwagens realisieren zu können, umfasst die Unterbodenverkleidung ein im Bereich des Fahrzeugrades 12 angeordnetes, zweites Unterbodenverkleidungselement 20, welches bei einer Schwenkbewegung des Fahrzeugrades 12 mit dem Fahrzeugrad 12 gegenläufig zu dem ersten Unterbodenverkleidungselement 10 mitbewegbar, vorzugsweise mitschwenkbar ist.

Wird das Fahrzeugrad 12 um seine Lenkachse im Gegenuhrzeigersinn und somit in eine der ersten Schwenkrichtung entgegengesetzte, zweite Schwenkrichtung um die Lenkachse geschwenkt, so wird dabei das zweite Unterbodenverkleidungselement 20 mit dem Fahrzeugrad 12 mitbewegt. Dadurch kann durch das zweite Unterbodenverkleidungselement 12 ein weiterer, besonders großer Teilbereich des Radhauses 14 in Fahrzeughochrichtung nach unten hin abgedeckt werden, wobei gleichzeitig Kollisionen zwischen dem Fahrzeugrad 12 und dem zweiten Unterbodenverkleidungselement 20 vermieden werden können, wenn das Fahrzeugrad 12 in die zweite Schwenkrichtung geschwenkt beziehungsweise gelenkt wird. Die Unterbodenverkleidungselemente 10 und 20 sind dabei relativ zueinander und gegenläufig bewegbar, insbesondere verschwenkbar. Wird das Fahrzeugrad 12 in die erste Schwenkrichtung geschwenkt, so werden sowohl das Fahrzeugrad 12 als auch das erste Unterbodenverkleidungselement 10 relativ zum zweiten Unterbodenverkleidungselement 20 bewegt, während dieses vorzugsweise stillsteht beziehungsweise nicht verschwenkt wird. Wird das Fahrzeugrad 12 hingegen in die zweite Schwenkrichtung geschwenkt, so werden dadurch sowohl das Fahrzeugrad 12 als auch das zweite Unterbodenverkleidungselement 20 relativ zum ersten Unterbodenverkleidungselement 10 bewegt, vorzugsweise verschwenkt, welches währenddessen beispielsweise stillsteht beziehungsweise nicht verschwenkt wird. Die Rückstellung des jeweiligen Unterbodenverkleidungselements 10 beziehungsweise 20 bei einer Rückstellung des eingeschlagenen Vorderrades 12 in seine Stellung für eine Geradeausfahrt des Fahrzeugs erfolgt beispielsweise mittels eines Federelements, welches das jeweilige Unterbodenverkleidungselement 10 beziehungsweise 20 zumindest in einem ausgelenkten Zustand mit einer Rückstellkraft beaufschlagt.

Im Vergleich zu einem einstückigen beziehungsweise einteiligen, mit dem Fahrzeugrad 12 mitschwenkbaren Unterbodenverkleidungsteil, welches bei jeder Schwenkbewegung des Fahrzeugrades 12 mit diesem mitschwenkt, kann die Anzahl an auf die jeweiligen Unterbodenverkleidungselemente 10 und 20 wirkenden Lastwechseln halbiert werden, da bei einem Lenkeinschlag des Fahrzeugrades 12 stets nur eines der Unterbodenverkleidungselemente 10 und 20 in Bewegung ist. Ferner ist es dadurch möglich, die Länge von jeweiligen Dichtflächen 22 gering zu halten, sodass eine besonders effektive Abdichtung der Unterbodenverkleidungselemente 10 und 20 gegen sich daran anschließende, weitere Bauelemente des Personenkraftwagens realisierbar ist.

Bei einem der genannten Bauelemente handelt es sich vorliegend um die Radlaufschale 16, gegen welche die Unterbodenverkleidungselemente 10 und 20 über die jeweiligen Dichtflächen 22 abdichtbar beziehungsweise abgedichtet sind. Durch diese Abdichtung können Fugen oder Spalte zwischen den Unterbodenverkleidungselemente 10 und 20 und der Radlaufschale 16 abgedichtet werden, sodass übermäßige, die Aerodynamik, insbesondere den Luftwiderstand, des Personenkraftwagens beeinträchtigende Luftverwirbelungen vermieden werden können.

Die beiden unabhängig voneinander bewegbaren Unterbodenverkleidungselemente 10 und 20 sind im Wesentlichen plattenförmig ausgebildet, können aber eine gewisse Flexibilität aufweisen und sind dennoch zumindest im Wesentlichen formstabil ausgebildet.

Ein weiteres dieser Bauelemente ist beispielsweise ein drittes, festes Unterbodenverkleidungselement 24 der Unterbodenverkleidung, welches plattenförmig ausgebildet ist und sich vorzugsweise zwischen dem in der Fig. dargestellten Radhaus 14 und dem auf der anderen Fahrzeugseite vorgesehenen, in der Darstellung gemäß der Fig. nicht erkennbaren Radhaus erstreckt. Aus der Fig. ist erkennbar, dass das dritte Unterbodenverkleidungselement 24 einen Vorsprung 26 aufweist, welcher zumindest teilweise in Fahrzeuglängsrichtung zwischen den Unterbodenverkleidungselementen 10 und 20 angeordnet ist. In Fahrzeugquerrichtung nach innen schließt sich an einen Vorsprung 26 ein Grundkörper 28 des dritten Unterbodenverkleidungselements 24 an, wobei der Vorsprung 26 in Fahrzeugquerrichtung nach außen hin von dem Grundkörper 28 absteht. Dabei ist der Grundkörper 28 einstückig mit dem Vorsprung 26 ausgebildet. Mittels des Grundkörpers 28 ist beispielsweise ein in der Fig. nicht erkennbarer Motorraum des Personenkraftwagens in Fahrzeugrichtung nach unten zumindest teilweise abgedeckt. Festzuhalten bleibt, dass der in das Radhaus 14 bis nahe an das Vorderrad 12 hineinragende Vorsprung 26 hier zumindest im Wesentlichen trapezförmig ausgebildet ist. Die Lage des Vorsprungs 26 innerhalb des Radhauses 14 ist also ortsfest. Ein solcher Vorsprung 26 ist vorzugsweise auch auf der dem anderen Radhaus zugewandten Seite des Unterbodenverkleidungselements 24 vorgesehen.

Die ebenfalls plattenförmig ausgebildeten Unterbodenverkleidungselemente 10 und 20 sind bewegliche Teile der Unterbodenverkleidung, wobei das dritte Unterbodenverkleidungselement 24 ein demgegenüber festes Teil der Unterbodenverkleidung ist. Dies bedeutet, dass die Unterbodenverkleidungselemente 10 und 20 relativ zum Unterbodenverkleidungselement 24 bewegbar, vorzugsweise verschwenkbar sind. Das Unterbodenverkleidungselement 24, insbesondere der Vorsprung 26, wird insbesondere hinsichtlich seiner Geometrie von der Radhüllkurve bestimmt, um Kollisionen des Fahrzeugrades 12 mit dem Vorsprung 26 zu vermeiden, wenn das Fahrzeugrad 12 verschwenkt wird. Aus der Fig. ist klar erkennbar, dass der Vorsprung 26 zumindest teilweise in das beziehungsweise unter Radhaus 14 ragt, sodass ein weiterer Teilbereich des Radhauses 14 in Fahrzeugrichtung nach unten hin durch den Vorsprung 26 abgedeckt ist. Die beiden beweglichen Teile in Form der Unterbodenverkleidungselemente 10 und 20 decken jeweilige Teilbereiche in Fahrzeuglängsrichtung vor und hinter dem Vorsprung 26 beziehungsweise dem festen Teil ab.

Aus der Fig. geht hervor, dass die beweglichen Unterbodenverkleidungselemente 10 und 20 oberhalb des feststehenden Unterbodenverkleidungselements 24 beziehungsweise des Vorsprungs 26 angeordnet sind und sich auch bei Geradeausfahrt des Fahrzeugs teilweise in Überdeckung mit dem Vorsprung 26 befinden.

Durch die Verwendung der beweglichen Unterbodenverkleidungselemente 10 und 20 und des demgegenüber festen Unterbodenverkleidungselements 24 beziehungsweise des Vorsprungs 26 kann auch eine besonders einfache Führung der beweglichen Teile (Unterbodenverkleidungselemente 10 und 20) realisiert werden, da die Unterbodenverkleidungselemente 10 und 20 beispielsweise an das feste Unterbodenverkleidungselement 24 angebunden sind. Dies bedeutet, dass die Unterbodenverkleidungselemente 10 und 20 beispielsweise verschwenkbar an dem Unterbodenverkleidungselement 24 gehalten sind. Alternativ oder zusätzlich ist es denkbar, dass die Unterbodenverkleidungselemente 10 und 20 zumindest bei ihren Schwenkbewegungen an dem dritten Unterbodenverkleidungselement 24, insbesondere dem Vorsprung 26, geführt sind. Hierzu weist das Unterbodenverkleidungselement 24 Führungsbahnen 30 und 32 auf. Das Unterbodenverkleidungselement 10 weist ein Führungselement in Form eines Zapfens 34 auf, welcher in die korrespondierende Führungsbahn 30 eingreift, sodass dadurch das Unterbodenverkleidungselement 10 am Unterbodenverkleidungselement 24 geführt ist. Entsprechend dazu weist das Unterbodenverkleidungselement 20 ein weiteres Führungselement in Form eines Zapfens 36 auf, welcher in die korrespondierende Führungsbahn 32 eingreift. Dadurch ist das Unterbodenverkleidungselement 20 am Unterbodenverkleidungselement 24 geführt.

Festzuhalten bleibt, dass bei dem in der Fig. darstellten Ausführungsbeispiel der Unterbodenverkleidung die beweglichen Unterbodenverkleidungselemente 10, 20 jeweils mittels einer Kulissenführung an dem feststehenden Unterbodenverkleidungselement 24 angebunden sind. Je nach Ausgestaltung beziehungsweise Formgebung der jeweiligen Führungsbahn 30, 32 wird das jeweilige Unterbodenverkleidungselement 10, 20 bei einem Verschwenken des Vorderrades 12 verschwenkt und gegebenenfalls auch überlagernd translatorisch zum feststehenden Unterbodenverkleidungselement 24 bewegt.

Durch die besonders gut aus der Fig. erkennbare Aufteilung der Unterbodenverkleidung zumindest in das feste Unterbodenverkleidungselement 24 und die beweglichen Unterbodenverkleidungselemente 10 und 20 wird beispielsweise nur noch das feste Unterbodenverkleidungselement 24 beispielsweise an die federnde Achse des Personenkraftwagens angebunden.

Zur Funktion der erfindungsgemäßen Unterbodenverkleidung: Bei einer Ausgangsstellung des Fahrzeugrades 12, welches es bei einer Geradeausfahrt des Fahrzeugs einnimmt und welche in der Figur dargestellt ist, decken die jeweils in einer nicht-ausgelenkten Ausgangsstellung angeordneten, beweglichen Unterbodenverkleidungselemente 10, 20 sowie das unbewegliche dritte Unterbodenverkleidungselement 24 beziehungsweise dessen in das Radhaus 14 hineinragender Vorsprung 26 einen Großteil des Radhausraumes zwischen Fahrzeugrad und Radlaufschale und damit auch ein Lenkgestänge, eine Radaufhängung und dergleichen zur Fahrbahn hin ab. Bei einem Verschwenken des Fahrzeugrades 12 gemäß der Darstellung der Figur im Uhrzeigersinn wird dabei das erste Unterbodenverkleidungselement 10 mit bewegt, um Raum für das einschwenkende Fahrzeugrad zu schaffen, während das zweite Unterbodenverkleidungselement 20 in seiner in der Figur gezeigten Ausgangsstellung verbleibt. Die Bewegungsrichtung des Unterbodenverkleidungselements 10 wird durch die Kulissenführung, insbesondere durch die Form beziehungsweise den Verlauf der Führungsbahn 30 bestimmt. Bei einer Rückstellung des Fahrzeugrades 12 aus der ausgelenkten Stellung zurück in seine Geradeausstellung erfolgt eine Rückstellung des ersten Unterbodenverkleidungselements 10 in seine in der Figur gezeigte Ausgangsstellung. Bei einem Verschwenken des Fahrzeugrades 12 gemäß der Darstellung der Figur entgegen dem Uhrzeigersinn wird dabei das zweite Unterbodenverkleidungselement 20 mitbewegt, um Raum für das einschwenkende Fahrzeugrad zu schaffen, während das erste Unterbodenverkleidungselement 10 in seiner in der Figur gezeigten Ausgangsstellung verbleibt. Die Bewegungsrichtung des Unterbodenverkleidungselements 20 wird durch die Form beziehungsweise den Verlauf der Führungsbahn 32 bestimmt. Bei einer Rückstellung des Fahrzeugrades 12 aus der ausgelenkten Stellung zurück in seine Geradeausstellung erfolgt eine Rückstellung des zweiten Unterbodenverkleidungselements 20 in seine in der Figur gezeigte Ausgangstellung.

Festzuhalten bleibt, dass die beweglichen Unterbodenverkleidungselemente 10, 20 zumindest mittelbar mit dem Fahrzeugrad 12 und/oder Radaufhängungselementen beziehungsweise Radlenker oder dergleichen gekoppelt sind, damit eine Auslenkung derselben bei einem Einschlagen des Fahrzeugrades 12 erfolgt. Die Rückstellung des jeweiligen ausgelenkten beziehungsweise ausgeschwenkten Unterbodenverkleidungselements 10, 20 in seine Ausgangsstellung bei einer Rückstellung des Fahrzeugrades 12 in seine Geradesausfahrtstellung kann entweder ausschließlich durch die zumindest mittelbare Kopplung der Unterbodenverkleidungselemente 10, 20 mit dem Fahrzeugrad oder dergleichen erfolgen, oder aber auch zusätzlich oder alternativ federkraftunterstützt.

## Patentansprüche

1. Unterbodenverkleidung für einen Kraftwagen, insbesondere einen Personenkraftwagen, mit wenigstens einem im Bereich eines schwenkbaren Fahrzeugrades (12) angeordneten und bei einer Schwenkbewegung des Fahrzeugrades (12) mit diesem mitbewegbaren Unterbodenverkleidungselement (10),
**dadurch gekennzeichnet, dass**
wenigstens ein im Bereich des Fahrzeugrades (12) angeordnetes, zweites Unterbodenverkleidungselement (20) vorgesehen ist, welches bei einer Schwenkbewegung des Fahrzeugrades (12) mit diesem gegenläufig zu dem ersten Unterbodenverkleidungselement (10) mitbewegbar ist.

2. Unterbodenverkleidung nach Anspruch 1,
**dadurch gekennzeichnet, dass**
ein in Fahrzeuglängsrichtung zumindest teilweise zwischen den Unterbodenverkleidungselementen (10, 20) angeordnetes, festes, drittes Unterbodenverkleidungselement (24) vorgesehen ist,

3. Unterbodenverkleidung nach Anspruch 2,
**dadurch gekennzeichnet, dass**
das erste und zweite Unterbodenverkleidungselement (10, 20) bei ihren Schwenkbewegungen an dem dritten Unterbodenverkleidungselement (24) geführt sind.

4. Unterbodenverkleidung nach Anspruch 2 oder 3,
**dadurch gekennzeichnet, dass**
das erste und zweite Unterbodenverkleidungselement (10, 20) jeweils beweglich, insbesondere schwenkbar an dem dritten Unterbodenverkleidungselement (24) gehalten sind.

5. Unterbodenverkleidung nach Anspruch 2, 3 oder 4, **dadurch gekennzeichnet, dass**
die ersten und zweiten Unterbodenverkleidungselemente (10, 20) jeweils mittels einer Kulissenführung am dritten Unterbodenverkleidungselement (24) gehalten sind.

6. Unterbodenverkleidung nach einem der vorhergehenden Ansprüche,
**dadurch gekennzeichnet, dass**
die ersten und zweiten Unterbodenverkleidungselemente (10, 20) zur unabhängigen Bewegung derselben voneinander entkoppelt, insbesondere mechanisch entkoppelt sind.

7. Kraftwagen, insbesondere Personenkraftwagen, mit wenigstens einer Unterbodenverkleidung, welche wenigstens ein im Bereich eines schwenkbaren Fahrzeugrades (12) angeordnetes und bei einer Schwenkbewegung des Fahrzeugrades (12) mit diesem mitbewegbares Unterbodenverkleidungselement (10) umfasst,
**dadurch gekennzeichnet,**
- **dass** wenigstens ein im Bereich des Fahrzeugrades (12) angeordnetes, zweites Unterbodenverkleidungselement (20) vorgesehen ist welches bei einer Schwenkbewegung des Fahrzeugrades (12) mit diesem gegenläufig zu dem ersten Unterbodenverkleidungselement (10) mitbewegbar ist,
- **dass** mittels Lenkens des Fahrzeugrades (12) in eine erste Richtung das erste Unterbodenverkleidungselement (10) relativ gegenüber dem zweiten Unterbodenverkleidungselement (20) bewegbar ist und
- **dass** mittels des Lenkens des Fahrzeugrades (12) in eine zur ersten Richtung entgegengesetzte, zweite Richtung das zweite Unterbodenverkleidungselement (20) relativ gegenüber dem ersten Unterbodenverkleidungselement (10) bewegbar ist.

8. Kraftwagen nach Anspruch 7,
**dadurch gekennzeichnet,**
- **dass** bei einer Stellung des Fahrzeugrades (12) für eine Geradeausfahrt des Kraftwagens die ersten und zweiten Unterbodenverkleidungselemente (10, 20) jeweils in einer Ausgangsstellung angeordnet sind,
- **dass** beim Lenken des Fahrzeugrades (12) in eine der beiden möglichen Richtungen lediglich eines der beiden Unterbodenverkleidungselemente (10, 20) aus seiner Ausgangsstellung heraus bewegt wird, während das andere Unterbodenverkleidungselement in seiner Ausgangsstellung verbleibt, und
- **dass** beim Lenken des Fahrzeugrades (12) in die andere der beiden möglichen Richtungen das andere der beiden Unterbodenverkleidungselemente (10, 20) aus seiner Ausgangsstellung heraus bewegt wird, während das andere Unterbodenverkleidungselement in seiner Ausgangsstellung verbleibt.

## Claims

1. Underbody panelling for a motor vehicle, in particular a passenger car, with at least one underbody panelling element (10) located in the region of a pivotable vehicle wheel (12) and capable of moving together with a pivoting movement of the vehicle wheel (12),
**characterised in that**
at least one second underbody panelling element (20) located in the region of the vehicle wheel (12) and capable moving together with a pivoting movement of the vehicle wheel (12) in a direction opposite to that of the first underbody panelling element (10) is provided.

2. Underbody panelling according to claim 1,
**characterised in that**
a fixed third underbody panelling element (24) located at least partially between the underbody panelling elements (10, 20) in the longitudinal direction of the vehicle is provided.

3. Underbody panelling according to claim 2,
**characterised in that**
the first and second underbody panelling elements (10, 20) are guided on the third underbody panelling element (24) in their pivoting movements.

4. Underbody panelling according to claim 2 or 3,
**characterised in that**
the first and second underbody panelling elements (10, 20) are each held movably, in particular pivotably, on the third underbody panelling element (24).

5. Underbody panelling according to claim 2, 3 or 4,
**characterised in that**
the first and second underbody panelling elements (10, 20) are each held on the third underbody panelling element (24) by means of a gate guide.

6. Underbody panelling according to any of the preceding claims, **characterised in that**
the first and second underbody panelling elements (10, 20) are decoupled from each other, in particular mechanically decoupled, for independent movement.

7. Motor vehicle, in particular passenger car, with at least one underbody panelling comprising at least one underbody panelling element (10) located in the region of a pivotable vehicle wheel (12) and capable of moving together with a pivoting movement of the vehicle wheel (12), **characterised in that**
- at least one second underbody panelling element (20) located in the region of the vehicle wheel (12) and capable moving together with a pivoting movement of the vehicle wheel (12) in a direction opposite to that of the first underbody panelling element (10) is provided,
- the first underbody panelling element (10) is movable relative to the second underbody panelling element (20) by steering the vehicle wheel (12) in a first direction, and
- the second underbody panelling element (20) is movable relative to the first underbody panelling element (10) by steering the vehicle wheel (12) in a second direction opposite to the first direction.

8. Motor vehicle according to claim 7,
**characterised in that**
- in a position of the vehicle wheel (12) for a straight-ahead travel of the motor vehicle, the first and second underbody panelling elements (10, 20) are placed in a home position,
- if the vehicle wheel (12) is steered in one of the two possible directions, only one of the two underbody panelling elements (10, 20) is moved out of its home position while the other underbody panelling element remains in its home position, and
- if the vehicle wheel (12) is steered in the other of the two possible directions, the other of the two underbody panelling elements (10, 20) is moved out of its home position while the other underbody panelling element remains in its home position.

## Revendications

1. Habillage de dessous de caisse pour un véhicule automobile, en particulier pour une voiture particulière, comprenant au moins un élément d'habillage de dessous de caisse (10) disposé dans la zone d'une roue de véhicule pivotante (12) et qui se déplace avec la roue de véhicule (12) lorsque celle-ci pivote, **caractérisé en ce qu'**au moins un second élément d'habillage de dessous de caisse (20) est disposé dans la zone de la roue de véhicule (12), lequel, lorsque la roue de véhicule (12) pivote, peut se déplacer avec cette dernière dans le sens opposé au premier élément d'habillage de dessous de caisse (10).

2. Habillage de dessous de caisse selon la revendication 1, **caractérisé en ce qu'**un troisième élément d'habillage de dessous de caisse (24) fixe est disposé dans la direction longitudinale du véhicule au moins partiellement entre les éléments d'habillage de dessous de caisse (10, 20).

3. Habillage de dessous de caisse selon la revendication 2, **caractérisé en ce que** le premier et le deuxième éléments d'habillage de dessous de caisse (10, 20) sont guidés lors de leurs mouvements de pivotement sur le troisième élément d'habillage de dessous de caisse.

4. Habillage de dessous de caisse selon la revendication 2 ou la revendication 3, **caractérisé en ce que** le premier et le second éléments d'habillage de dessous de caisse (10, 20) sont maintenus amovibles respectivement en particulier en pivotement sur le troisième élément d'habillage de dessous de caisse.

5. Habillage de dessous de caisse selon la revendication 2, 3 ou 4, **caractérisé en ce que** le premier et le deuxième éléments d'habillage de dessous de caisse (10, 20) sont maintenus respectivement au moyen d'un guide à coulisse sur le troisième élément d'habillage de dessous de caisse (24).

6. Habillage de dessous de caisse selon l'une quelconque des revendications précédentes, **caractérisé en ce que** le premier et le second éléments d'habillage de dessous de caisse (10, 20) peuvent se désolidariser l'un de l'autre pour leur déplacement indépendant, en particulier peuvent se désolidariser mécaniquement.

7. Véhicule automobile, en particulier voiture particulière, comprenant au moins un habillage de dessous de caisse, qui au moins comprend un élément d'habillage de dessous de caisse disposé dans la zone d'une roue de véhicule pivotante (12) et se déplaçant avec cette dernière lors d'un mouvement de pivotement de la roue de véhicule (12), **caractérisé en ce qu'**
- au moins un second élément d'habillage de dessous de caisse (20) disposé au moins dans la zone de la roue de véhicule (12), qui peut se déplacer lors d'un mouvement de pivotement de la roue de véhicule (12) avec cette dernière dans le sens opposé au premier élément d'habillage de dessous de caisse (10),
- au moyen de la direction de la roue de véhicule (12), le premier élément d'habillage de dessous de caisse (10) peut se déplacer dans une première direction par rapport au second élément d'habillage de dessous de caisse (20) et
- au moyen de la direction de la roue de véhicule (12) dans une seconde direction opposée à la première direction, le deuxième élément d'habillage de dessous de caisse (20) peut se déplacer par rapport au premier élément d'habillage de dessous de caisse (10).

8. Véhicule automobile selon la revendication 7, **caractérisé en ce que**
- lors d'une position de la roue de véhicule (12) pour une trajectoire droite du véhicule automobile les premier et deuxième éléments d'habillage de dessous de caisse (10, 20) sont disposés chacun dans une position de départ,
- lors de la direction de la roue de véhicule (12) dans une des deux directions possibles uniquement l'un des deux éléments d'habillage de dessous de caisse (10, 20) peut se déplacer à partir de sa position de départ, pendant que l'autre élément d'habillage de dessous de caisse demeure dans sa position de départ, et
- lors la direction de la roue de véhicule (12) dans l'autre des autres directions possibles, l'autre des deux éléments d'habillage de dessous de caisse (10, 20) peut se déplacer à partir de sa position de départ, tandis que l'autre élément d'habillage de dessous de caisse demeure dans sa position de départ.
